# EUROPÄISCHE PATENTSCHRIFT

(11) **EP 3 569 337 B1**
(45) Veröffentlichungstag und Bekanntmachung des Hinweises auf die Patenterteilung: **10.04.2024**
(21) Anmeldenummer: 18172995.5
(22) Anmeldetag: 17.05.2018
(51) Int. Cl.: B23B 31/00

(54) **WERKZEUG- ODER WERKSTÜCKAUFNAHME UND SET AUS WERKZEUGMASCHINE UND WERKZEUG- ODER WERKSTÜCKAUFNAHME**
TOOL OR WORKPIECE HOLDER AND SET CONSISTING OF MACHINE TOOL AND TOOL OR WORKPIECE HOLDER
PORTE-OUTIL OU PORTE-PIÈCE ET ENSEMBLE DE LA MACHINE-OUTIL ET DU PORTE-OUTIL OU DU PORTE-PIÈCE

(43) Veröffentlichungstag der Anmeldung: 20.11.2019
(73) Patentinhaber: Adelbert Haas GmbH, 78647 Trossingen (DE)
(72) Erfinder: Zepf, Timo, 78606 Seitingen-Oberflacht (DE); Finsler, Martin, 78050 Villingen-Schwenningen (DE)
(74) Vertreter: Westphal, Mussgnug & Partner Patentanwälte mbB

(56) Entgegenhaltungen:
- EP-A1- 0 443 102
- CH-A5- 686 120
- FR-A1- 2 819 742
- US-A- 3 554 080
- US-B1- 6 409 439

## Beschreibung

Die Erfindung betrifft eine Werkzeug- oder Werkstückaufnahme mit den Merkmalen des Oberbegriffs des Patentanspruchs 1, wie sie z.B. aus der US 6 409 439 B1 bekannt ist und ein Set aus einer Werkzeugmaschine und einer solchen Werkzeug- oder Werkstückaufnahme. Weitere Werkzeug- oder Werkstückaufnahmen sind aus der FR 2 819 742 A1, der US 3 554 080 A, der EP 0 443 102 A1 und der CH 686 120 A5 bekannt.

Werkzeugmaschinen werden in immer weitergehendem Maße automatisiert betrieben. Dies bringt insbesondere mit sich, dass auch der Werkzeugwechsel beim Betrieb einer solchen Werkzeugmaschine teil- oder vollautomatisiert durchgeführt wird. Dabei ist es eine gängige Praxis, die verschiedenen Werkzeuge mit einer Werkzeugaufnahme bereitzustellen und das Werkzeug über die Werkzeugaufnahme mit der entsprechenden Spindel der Werkzeugmaschine zu verbinden. Die Werkzeugaufnahme bildet also die Schnittstelle zwischen Werkzeug und Maschine.

Um zu gewährleisten, dass Werkzeuge mit unterschiedlichen Werkzeugmaschinen verwendbar sind, gibt es standardisierte Werkzeugaufnahmen, zu denen auch DIN Normen existieren, z.B. die DIN 69871-1, die DIN 2080, die DIN 69893-1 und die DIN 69880. Als inzwischen weitgehend veraltet sind Morsekegel, die mit der Kennung "MK" versehen werden, anzusehen. Aktuell noch immer weit verbreitet sind Steilkegel mit der Kennung "SK", die eine Weiterentwicklung der Morsekegel sind. Auch diese sind aber inzwischen weiterentwickelt worden zu Hohlschaftkegeln, deren Kennung "HSK" ist und die insbesondere für den Betrieb bei hohen Drehzahlen Vorteile aufweisen und zudem Vorteile beim Werkzeugwechsel haben. Bei allen Kennungen wird zudem die Nenngröße angegeben; beispielsweise ist eine HSK80-Schnittstelle ist also Hohlschaftkegel mit Nenngröße 80.

Anzumerken ist, dass es auch Fälle gibt, bei denen das zu bearbeitenden Werkstück mit der Spindel gekoppelt wird. Um dies zu verdeutlichen wird im Folgenden der Begriff "Werkzeug- oder Werkstückaufnahme" verwendet, obwohl eigentlich jede Werkzeugaufnahme grundsätzlich auch eine Werkstückaufnahme ist bzw. zu einer Werkstückaufnahme wird, wenn man das Spannmittel, in das bestimmungsgemäß bei einer Werkzeugaufnahme das Werkzeug aufgenommen wird, zum Halten eines Werkstücks verwendet. Strukturell unterscheiden sich also Werkzeug- und Werkstückaufnahmen nicht zwingend voneinander.

Der standardisierte Abschnitt der Werkzeug- oder Werkstückaufnahme, der mit der Spindel verbunden wird, wird dabei in dieser Beschreibung als "Kopplungsabschnitt" bezeichnet, der standardisierte Abschnitt der Spindel, der mit diesem Kopplungsabschnitt der Werkzeug- oder Werkstückaufnahme zusammenwirkt, als Werkzeugschnittstelle. Anzumerken ist dabei, dass die Werkzeugschnittstellen dabei zwar herstellerseitig stets so ausgelegt werden, dass sie mit standardisierten Kopplungsabschnitten von Werkzeug- oder Werkstückaufnahmen bestimmungsgemäß zusammenwirken, aber gegebenenfalls herstellerspezifisch modifiziert werden.

Naturgemäß möchte man möglichst vermeiden, jedes Werkzeug jeweils in einer Ausführung für jeden Standard bereithalten zu müssen. Ein bekannter Ansatz dafür, dies zu vermeiden ist, Schnittstellenadapter für die Kopplung von Werkzeug- oder Werkstückaufnahmen gemäß einer ersten Norm an die Spindel einer Werkzeugmaschine für Werkzeug- oder Werkstückaufnahmen gemäß einer zweiten Norm bereitzustellen.

Ein solcher Schnittstellenadapter stellt also gewissermaßen ein Bauteil dar, mit dem die Spindel der Werkzeugmaschine verlängert wird, wobei der Anschluss zur Spindel über einen der Norm für die Werkzeug- oder Werkstückaufnahme, für die die Werkzeugmaschine ausgelegt ist, entsprechenden Abschnitt im maschinenseitigen Endbereich des Schnittstellenadapters hergestellt wird und wobei der Schnittstellenadapter an seinem werkzeugseitigen Endbereich eine Aufnahme für den Kopplungsabschnitt der einer anderen Norm entsprechenden Werkzeug- oder Werkstückaufnahme aufweist.

In der Praxis führt diese Herangehensweise aber zu Nachteilen. Einerseits führt sie zu einer Verlängerung der Spindel der Werkzeugmaschine durch den Schnittstellenadapter, die den Raumbereich, in dem eine Bearbeitung des Werkstücks erfolgen kann, im Regelfall verringert. Andererseits erhöht sie die Zahl der Stellen, an denen eine Fehljustierung erfolgen kann, was gegebenenfalls die reproduzierbare Fehlergenauigkeit negativ beeinflussen kann.

Die Aufgabe der Erfindung besteht daher darin, eine Werkzeug- oder Werkstückaufnahme bereitzustellen, die auch ohne Schnittstellenadapter geeignet ist, um mit für das Zusammenwirken mit unterschiedlichen Standards unterfallenden Werkzeug- oder Werkstückaufnahmen ausgelegten Werkzeugschnittstellen von Spindeln von Werkzeugmaschinen verwendet zu werden.

Diese Aufgabe wird gelöst durch eine Werkzeug- oder Werkstückaufnahme mit den Merkmalen des Patentanspruchs 1 bzw. 3 und ein Set aus einer Werkzeugmaschine und mindestens einer solchen Werkzeug- oder Werkstückaufnahme mit den Merkmalen des Patentanspruchs 6. Vorteilhafte Weiterbildungen der Erfindung sind Gegenstand der jeweiligen abhängigen Patentansprüche.

Die erfindungsgemäße Werkzeug- oder Werkstückaufnahme zur Kopplung eines Werkzeugs oder Werkstücks an eine Antriebsspindel einer Werkzeugmaschine weist einen Werkzeug- oder Werkstückaufnahmeabschnitt, an dem ein Spannmittel zur Aufnahme des Werkzeugs oder Werkstücks angeordnet ist und eine Kopplungsabschnitt zur Kopplung an eine Werkzeugschnittstelle der Antriebsspindel der Werkzeugmaschine auf. Ferner ist der Kopplungsabschnitt derart ausgestaltet, dass er zur Kopplung sowohl an eine Werkzeugschnittstelle zur Aufnahme von Werkzeug- oder Werkstückaufnahmen gemäß einer ersten Norm als auch an eine Werkzeugschnittstelle zur Aufnahme von Werkzeug- oder Werkstückaufnahmen gemäß einer zweiten Norm geeignet ist. Diese Möglichkeit basiert insbesondere auf der Erkenntnis, dass es für eine ordnungsgemäße Funktion der Werkzeugmaschine für fast alle Anwendungen bereits völlig ausreichend ist, wenn ein Teil des Kopplungsabschnitts und ein Teil der Werkzeugschnittstelle zusammenwirken, um das Werkzeug mit der Spindel der Werkzeugmaschine zu verbinden. Diese Erkenntnis erlaubt es, Kopplungsabschnitte bereitzustellen, die mit Werkzeugschnittstellen, die zur Aufnahme von Werkzeug- oder Werkstückaufnahmen gemäß unterschiedlicher Normen vorgesehen sind, zusammenwirken können.

Anzumerken ist dabei insbesondere, dass im Sinne dieser Beschreibung eine Werkzeugschnittstelle als zur Aufnahme einer Werkzeug- oder Werkstückaufnahme einer gegebenen Norm geeignet anzusehen ist, wenn sie mit einer solchen, der gegebenen Norm unterfallenden Werkzeugaufnahme so zusammenwirken kann, dass in der Werkzeugaufnahme aufgenommene Werkzeuge von der Werkzeugmaschine zur Bearbeitung von Werkstücken verwendet werden können oder in der Werkstückaufnahme aufgenommene Werkstücke von der Werkzeugmaschine mit Werkzeugen bearbeitet werden können. Dieses Begriffsverständnis führt insbesondere dazu, dass die Werkzeugschnittstelle -insbesondere herstellerspezifisch oder anwendungsspezifisch- so modifiziert sein kann, dass Abschnitte der Werkzeugschnittstelle nicht mehr zum Zusammenwirken der Werkzeugschnittstelle mit einer normkonformen Werkzeug- oder Werkstückaufnahme beitragen.

Eine erste erfindungsgemäße konkrete Lösung, einen solchen Kopplungsabschnitt zu realisieren besteht darin, dass der Kopplungsabschnitt einen Adapterring aufweist, der in zwei unterschiedlichen Orientierungen an der Werkzeug- oder Werkstückaufnahme fixierbar ist, so dass die Werkzeug- oder Werkstückaufnahme in der einen Orientierung des Adapterrings an die Werkzeugschnittstelle zur Aufnahme von Werkzeug- oder Werkstückaufnahmen gemäß der ersten Norm koppelbar ist und in der zweiten Orientierung des Adapterrings an die Werkzeugschnittstelle zur Aufnahme von Werkzeug- oder Werkstückaufnahmen gemäß der zweiten Norm koppelbar ist.

Die Verwendung des Begriffs "Ring" bei der Bezeichnung "Adapterring" soll dabei insbesondere nur insoweit eine geometrische Beschränkung darstellen, als sie festlegt, dass die geometrische Struktur des Adapterrings durch eine 360°-Rotation einer Fläche um eine in derselben Ebene wie die Fläche liegende, aber die Fläche nicht schneidende Achse beschrieben werden kann. Auch eine scheibenförmige Struktur kann also als Adapterring verstanden werden. Wichtig für die Kopplung des Adapterrings an eine Werkzeugschnittstelle ist dabei insbesondere die Formgebung der Abschnitte der Kontur der Fläche, auf der von dieser Achse abgewandten Seite, also seine Außenkontur.

Ein solcher Adapterring kann also so aufgebaut sein, dass oberhalb einer Ebene, in der seine Radien liegen, seine Außenkontur so ausgestaltet ist, dass sie mit einer Werkzeugschnittstelle zur Aufnahme von Werkzeug- oder Werkstückaufnahmen einer ersten Norm zusammenwirken kann, während unterhalb dieser Ebene seine Außenkontur so ausgestaltet ist, dass sie mit einer Werkzeugschnittstelle zur Aufnahme von Werkzeug- oder Werkstückaufnahmen einer zweiten Norm zusammenwirken kann. Je nachdem ob die oberhalb der Ebene liegende Außenkontur oder die unterhalb der Ebene liegende Außenkontur dann der Werkzeugschnittstelle zugewandt ist, was durch einfaches Drehen des Adapterrings um 180° um eine in dieser Ebene liegende Achse, die einen Radius des Adapterrings enthält erreicht werden kann, ist dann ein Zusammenwirken mit einer Werkzeugschnittstelle für die Werkzeug- oder Werkstückaufnahmen gemäß der ersten Norm oder mit einer Werkzeugschnittstelle für die Werkzeug- oder Werkstückaufnahmen gemäß der zweiten Norm realisierbar.

Anzumerken ist in diesem Zusammenhang, dass die Oberseite und die Unterseite sich in axialer Richtung, also senkrecht zu der besagten Ebene, unterschiedlich weit erstrecken können, um so den Anforderungen der unterschiedlichen Werkzeugschnittstellen, mit denen sie zusammenwirken sollen, zu genügen.

Eine Fixierung des Adapterrings kann beispielsweise mit Schrauben erreicht werden, die das Adapterringmaterial im Wesentlichen in Richtung senkrecht zu der Ebene, in der die Radien des Rings liegen, durchsetzen und ihn an der Werkzeug- oder Werkstückaufnahme befestigen.

Besonders bevorzugt ist es, wenn der Adapterring abschnittsweise -insbesondere mit einem Abschnitt der Ober- bzw. Unterseite relativ zu der Ebene, in der die Radien des Adapterrings liegen- in eine in die Werkzeug- oder Werkstückaufnahme eingebrachte Ringnut aufgenommen ist. Wenn diese spielfrei ausgeführt ist, wird dadurch eine hochgenaue Positionierung des Adapterrings durchgeführt. Andererseits erlaubt eine Ringnut mit Spiel im Zusammenwirken mit Justiermitteln einen Toleranzausgleich, der je nach Anwendung ebenfalls erwünscht sein kann.

Eine alternative erfindungsgemäße konkrete Lösung, einen solchen ersten Kopplungsabschnitt zu realisieren besteht darin, dass der Kopplungsabschnitt einen ersten Abschnitt aufweist, der eine Kopplung an eine Werkzeugschnittstelle zur Aufnahme von Werkzeug- oder Werkstückaufnahmen gemäß der ersten Norm erlaubt und einen sich an den ersten Abschnitt -insbesondere in axialer Richtung der Werkzeug- oder Werkstückaufnahme, die im Regelfall mit dem Verlauf der Drehachse des in die Werkzeug- oder Werkstückaufnahme aufgenommenen Werkzeugs oder Werkstücks bei seiner Benutzung zusammenfällt- mittelbar, also über einen Zwischenbereich verbunden, oder unmittelbar anschließenden zweiten Abschnitt aufweist, der eine Kopplung an eine Werkzeugschnittstelle zur Aufnahme von Werkzeug- oder Werkstückaufnahmen gemäß der zweiten Norm erlaubt.

Insbesondere kann eine derartige Werkzeug- oder Werkstückaufnahme für Anwendungsfälle realisiert werden, bei denen die Werkzeugschnittstelle zur Aufnahme von Werkzeug- oder Werkstückaufnahmen gemäß der ersten Norm eine für Steilkegel-Werkzeugaufnahmen geeignete Werkzeugschnittstelle ist und die Werkzeugschnittstelle zur Aufnahme von Werkzeug- oder Werkstückaufnahmen gemäß der zweiten Norm eine für Hohlschaftkegel-Werkzeugaufnahmen geeignete Werkzeugschnittstelle ist. In diesen Fällen hat es sich als besonders zweckmäßig erwiesen, wenn der Abschnitt, der für das Zusammenwirken mit der für Steilkegel-Werkzeugaufnahmen geeigneten Werkzeugschnittstelle vorgesehen ist, weiter vom Spannmittel entfernt ist als der Abschnitt, der für das Zusammenwirken mit der für Hohlschaftkegel-Werkzeugaufnahmen geeignet ist.

Besonders gut realisierbar ist die Kombination eines solchen ersten und eines solchen zweiten Abschnitts in einem Kopplungsabschnitt wenn die Abschnitte auf die Verwendung mit einer SK50-Werkzeugschnittstelle und einer HSK80-Werkzeugschnittstelle abgestimmt sind.

Unabhängig von der konkreten Ausführungsform des erfindungsgemäßen Kopplungsabschnitts hat es sich als vorteilhaft erwiesen, wenn die Werkzeug- oder Werkstückaufnahme einen Anschlag aufweist, der eine Einführtiefe der Werkzeug- oder Werkstückaufnahme in die Werkzeugschnittstelle definiert. Dies kann zum Beispiel die Stirnfläche eines Bundes sein, der so angeordnet ist, dass diese Stirnfläche bei der erwünschten Einführtiefe mit einer Stirnfläche der Spindel wechselwirkt.

Das erfindungsgemäße Set weist eine Werkzeugmaschine mit mindestens einer Spindel, die eine Werkzeugschnittstelle zur Aufnahme von Werkzeug- oder Werkstückaufnahmen gemäß einer ersten Norm hat und mindestens eine erfindungsgemäße Werkzeug- oder Werkstückaufnahme auf.

Gemäß einer vorteilhaften Ausführungsform eines solchen Sets weist die Werkzeugschnittstelle mindestens einen modifizierten Abschnitt auf, so dass sie in dem oder den modifizierten Abschnitten nicht mit einer Werkzeug- oder Werkstückaufnahme gemäß der ersten Norm wechselwirkt, durch die Wechselwirkung dieser Werkzeug- oder Werkstückaufnahme mit den anderen Abschnitten einer solchen modifizierten Werkzeugschnittstelle jedoch weiterhin die sichere und bestimmungsgemäße Verwendbarkeit der der ersten Norm entsprechenden Werkzeug- oder Werkstückaufnahme und des darin angeordneten Werkzeugs bei der Benutzung der Werkzeugmaschine garantiert.

Beispielsweise kann eine Werkzeugschnittstelle für eine Werkzeugaufnahme nach SK50 Norm in ihrem modifizierten stirnseitigen Endabschnitt eine ringförmige Senke mit einem Durchmesser von 70mm aufweisen, ohne an Funktionalität für die Verwendung mit Werkzeugaufnahmen mit SK50-Standard zu verlieren.

Der Vorteil einer derartigen Modifikation liegt insbesondere darin, dass sie zusätzliche Freiheitsgrade für die Gestaltung des Kopplungsabschnitts der erfindungsgemäßen Werkzeug- oder Werkstückaufnahme bereitstellen kann.

Insbesondere ist es vorteilhaft, wenn bei an der Werkzeugschnittstelle bestimmungsgemäß angeordneter Werkzeug- oder Werkstückaufnahme lediglich Abschnitte der Werkzeugschnittstelle mit dem Kopplungsabschnitt der Werkzeug- oder Werkstückaufnahme, genauer gesagt einem der Abschnitte des Kopplungsabschnitts der Werkzeug- oder Werkstückaufnahme zusammenwirken. Die jeweils anderen Abschnitte des Kopplungsabschnitts der Werkzeug- oder Werkstückaufnahme sind dann so gestaltbar, dass über sie für die Wechselwirkung mit Werkzeugschnittstellen, die für die Verwendung mit einer anderen, insbesondere der zweiten Norm ausgelegt sind, hergestellt werden kann.

Die Erfindung wird nachfolgend anhand von Figuren, die Ausführungsbeispiele darstellen, näher erläutert. Es zeigt:
- Fig.1:: Ein erstes Ausführungsbeispiel einer Werkzeug- oder Werkstückaufnahme im Querschnitt,
- Fig.2a:: einen Ausschnitt aus einem Set aus einer Werkzeugmaschine und einer Werkzeug- oder Werkstückaufnahme 100 gemäß Figur 1, der die Wechselwirkung der Werkzeugoder Werkstückaufnahme 100 mit einer Werkzeugschnittstelle für Werkzeugaufnahmen nach SK-50 Norm illustriert,
- Fig.2b:: einen Ausschnitt aus einem Set aus einer Werkzeugmaschine und einer Werkzeug- oder Werkstückaufnahme 100 gemäß Figur 1, der die Wechselwirkung der Werkzeug- oder Werkstückaufnahme 100 mit einer Werkzeugschnittstelle für Werkzeugaufnahmen nach HSK-80 Norm illustriert,
- Fig. 3:: ein zweites Ausführungsbeispiel einer Werkzeug- oder Werkstückaufnahme im Querschnitt,
- Fig.4a:: einen Ausschnitt aus einem Set aus einer Werkzeugmaschine und einer Werkzeug- oder Werkstückaufnahme 200 gemäß Figur 3, der die Wechselwirkung der Werkzeug- oder Werkstückaufnahme 200 mit einer Werkzeugschnittstelle für Werkzeug- oder Werkstückaufnahmen nach SK-50 Norm illustriert, und
- Fig.4b:: einen Ausschnitt aus einem Set aus einer Werkzeugmaschine und einer Werkzeug- oder Werkstückaufnahme 200 gemäß Figur 3, der die Wechselwirkung der Werkzeug- oder Werkstückaufnahme 200 mit einer Werkzeugschnittstelle für Werkzeugaufnahmen nach HSK-80 Norm illustriert,

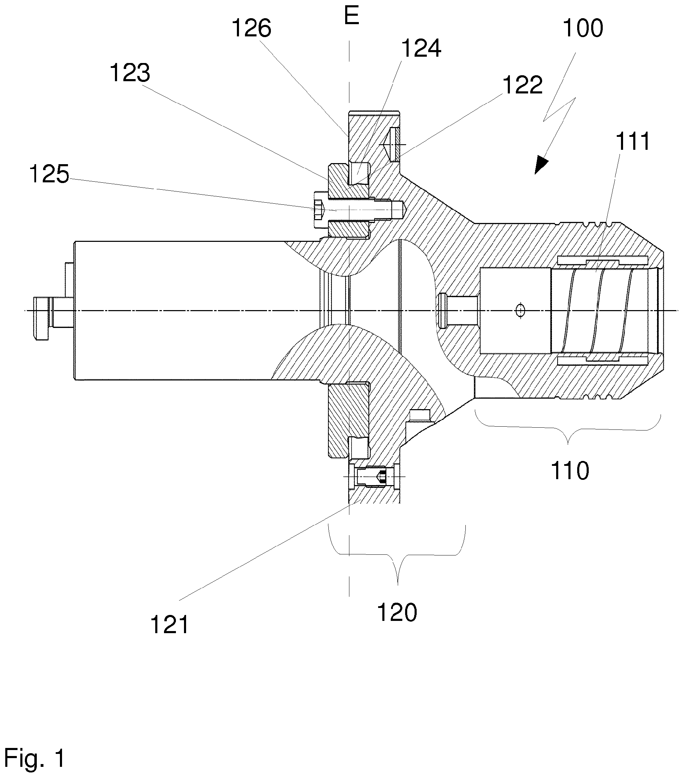

Figur 1 zeigt ein erstes Ausführungsbeispiel einer Werkzeug- oder Werkstückaufnahme 100 zur Kopplung eines in Figur 1 nicht dargestellten Werkzeugs an eine ebenfalls in Figur 1 nicht dargestellte Antriebsspindel einer Werkzeugmaschine. Die Werkzeug- oder Werkstückaufnahme 100 weist werkzeugseitig, also an der Seite, an der das Werkzeug aufgenommen wird, einen Werkzeug- oder Werkstückaufnahmeabschnitt 110 auf, der seinerseits ein Spannmittel 111, das in diesem Beispiel als übliches, fachnotorisch bekanntes Hydrodehnspannfutter ausgeführt ist und daher keiner näheren Beschreibung bedarf.

Ferner weist die Werkzeug- oder Werkstückaufnahme 100 maschinenseitig, also an der Seite, an der die Wechselwirkung mit der Antriebsspindel bzw. deren Werkzeugschnittstelle hergestellt wird, einen Kopplungsabschnitt 120 zur Kopplung an eine in Figur 1 nicht dargestellte Werkzeugschnittstelle einer Antriebsspindel einer Werkzeugmaschine auf, der insbesondere einen Bund 121, einen Adapterring 122 und einen zylindrischen Fortsatz 123 auf.

Der Adapterring 122 ist dabei so ausgeführt, dass seine Außenkontur 122a auf einer Seite einer Ebene E, in der die Radien des Adapterrings 122 liegen und die in der Figur 1 etwa mit der maschinenseitigen Oberfläche des Bunds 121 zusammenfällt, liegt -in der in Figur 1 wiedergegebenen Orientierung des Adapterrings 122 links von der Ebene E- für eine Aufnahme in eine Werkzeugschnittstelle gemäß der SK50-Norm geeignet ist. Die Außenkontur 122b, die auf der anderen Seite der Ebene E, in der die Radien des Adapterrings 122 liegen und die in der Figur 1 etwa mit der maschinenseitigen Oberfläche des Bunds 121 zusammenfällt, liegt -in der in Figur 1 wiedergegebenen Orientierung des Adapterrings 122 rechts von der Ebene E- ist hingegen für eine Aufnahme in eine Werkzeugschnittstelle gemäß der HSK80-Norm geeignet.

In die maschinenseitige Oberfläche des Bundes 121, die einen Anschlag 126 bildet, ist eine Ringnut 124 eingelassen, in der der Adapterring 122 partiell, insbesondere mit der Außenkontur 122b, aufgenommen und mit Schrauben 125 befestigt ist, so dass nur die Außenkontur 122a für die Wechselwirkung mit einer Werkzeugschnittstelle verfügbar ist. Offenkundig ermöglicht dies, den Adapterring 122 im Bedarfsfall um 180° zu drehen, so dass die Außenkontur 122a in die Ringnut 124 eintaucht und die Außenkontur 122b zur Wechselwirkung mit einer Werkzeugschnittstelle verfügbar ist.

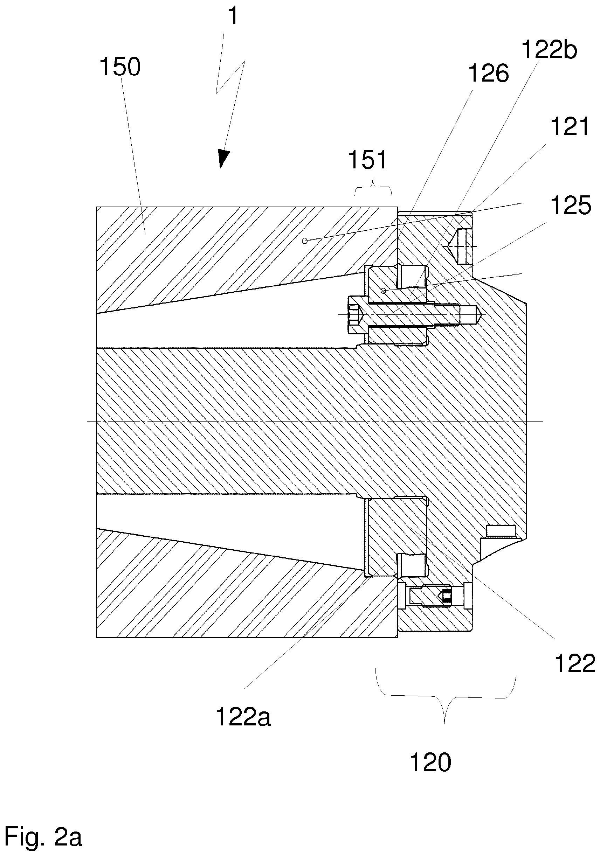

Die Figur 2a zeigt einen Ausschnitt aus einem Set 1 aus einer Werkzeugmaschine und einer Werkzeug- oder Werkstückaufnahme 100 gemäß Figur 1, der die Wechselwirkung der Werkzeug- oder Werkstückaufnahme 100 mit einer Werkzeugschnittstelle für Werkzeugaufnahmen nach SK-50 Norm illustriert, und zwar in einem Zustand des Sets, bei dem die Werkzeug- oder Werkstückaufnahme an der Werkzeugmaschine angeordnet ist. Dieser Ausschnitt deckt den Wechselwirkungsbereich zwischen dem dem Werkzeug zugewandten endseitigen Abschnitt einer Werkzeugschnittstelle 150 einer Spindel einer Werkzeugmaschine, und dem Kopplungsabschnitt 120 der Werkzeug- oder Werkstückaufnahme 100 ab.

Dabei ist die dargestellte Werkzeugschnittstelle 150 für die Aufnahme von Werkzeugaufnahmen gemäß der SK-50 Norm ausgelegt, weist aber in ihrem dem Werkzeug zugewandten Endbereich einen modifizierten Abschnitt 151, der mit einer ringförmigen Senke mit 70mm Durchmesser ausgeführt ist, auf.

Wie man der Figur 2a deutlich entnimmt, wirkt nur ein Abschnitt der Werkzeugschnittstelle 150, nämlich der modifizierte Abschnitt 151, mit dem Kopplungsabschnitt 120 der Werkzeug- oder Werkstückaufnahme, genauer gesagt mit dem Abschnitt 122a des Adapterrings 122 zusammen. Dies ist ausreichend, um die Kopplung zwischen Werkzeug- oder Werkstückaufnahme 100 und Werkzeugschnittstelle 150 sicher zu realisieren.

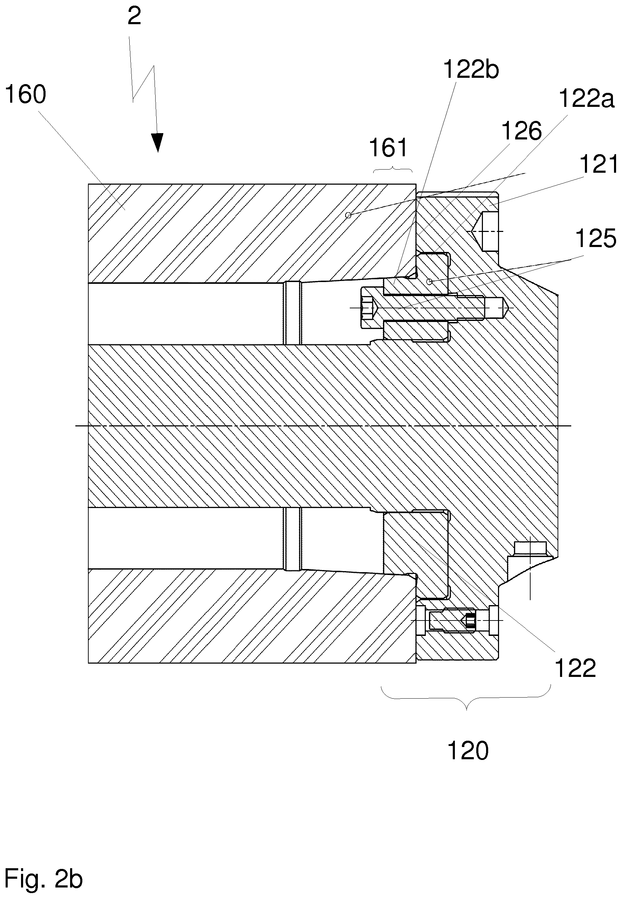

Die Figur 2b zeigt einen Ausschnitt aus einem Set 2 aus einer Werkzeugmaschine und einer Werkzeug- oder Werkstückaufnahme 100 gemäß Figur 1, der die Wechselwirkung der Werkzeug- oder Werkstückaufnahme 100 mit einer Werkzeugschnittstelle für Werkzeugaufnahmen nach SK-50 Norm illustriert, und zwar in einem Zustand des Sets, bei dem die Werkzeug- oder Werkstückaufnahme an der Werkzeugmaschine angeordnet ist. Dieser Ausschnitt deckt den Wechselwirkungsbereich zwischen dem dem Werkzeug zugewandten endseitigen Abschnitt einer Werkzeugschnittstelle 160 einer Spindel einer anderen Werkzeugmaschine als der des Sets aus Figur 2a oder einer anderen Spindel derselben Werkzeugmaschine wie der des Sets aus Figur 2a, und dem Kopplungsabschnitt 120 der Werkzeug- oder Werkstückaufnahme 100 ab. Dabei ist die dargestellte Werkzeugschnittstelle 160 für die Aufnahme von Werkzeugaufnahmen gemäß der HSK-80 Norm ausgelegt

Auch in der Figur 2b wirkt nur ein Abschnitt der Werkzeugschnittstelle 160, nämlich der -hier aber nicht modifizierte Abschnitt 161, mit dem Kopplungsabschnitt 120 der Werkzeug- oder Werkstückaufnahme, genauer gesagt mit dem Abschnitt 122b des nun in um 180° gedrehter Orientierung in der Ringnut 124 angeordneten Adapterrings 122 zusammen. Dies ist ausreichend, um die Kopplung zwischen Werkzeug- oder Werkstückaufnahme 100 und Werkzeugschnittstelle 160 sicher zu realisieren.

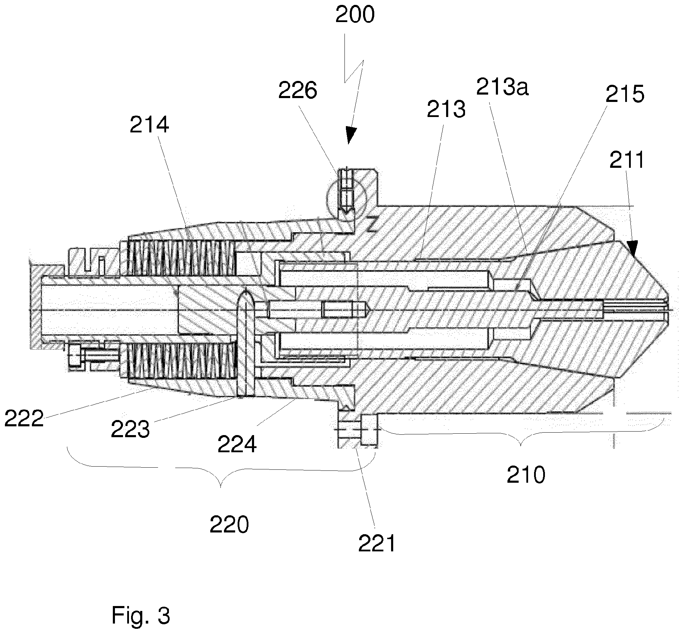

Figur 3 zeigt ein zweites Ausführungsbeispiel einer Werkzeug- oder Werkstückaufnahme 200 zur Kopplung eines in Figur 3 nicht dargestellten Werkzeugs an eine ebenfalls in Figur 3 nicht dargestellte Antriebsspindel einer Werkzeugmaschine. Die Werkzeug- oder Werkstückaufnahme 200 weist werkzeugseitig, also an der Seite, an der das Werkzeug aufgenommen wird, einen Werkzeug- oder Werkstückaufnahmeabschnitt 210 auf. Der Werkzeug- oder Werkstückaufnahmeabschnitt 210 weist seinerseits als Spannmittel 211 eine übliches Spannzangenfutter mit zur Werkzeugseite hin größer werdender Spannzange 212, die in einer abschnittsweise konisch zulaufenden Führung 213 aufgenommen und durch Tellerfederstapel 214 so mit der Führung 213 verspannt sind, dass die Spannzange 212 in den konischen Abschnitt 213a der Führung hineingezogen und so in ihrer geschlossene Position vorgespannt wird, auf. Zur Überwindung dieser Vorspannung, beispielsweise beim Einsetzen eines Werkzeugs, ist ein Stempel 215 vorgesehen.

Ferner weist die Werkzeug- oder Werkstückaufnahme 200 maschinenseitig, also an der Seite, an der die Wechselwirkung mit der Antriebsspindel bzw. deren Werkzeugschnittstelle hergestellt wird, einen Kopplungsabschnitt 220 zur Kopplung an eine in Figur 1 nicht dargestellte Werkzeugschnittstelle einer Antriebsspindel einer Werkzeugmaschine auf. Dabei weist der Kopplungsabschnitt 220 neben einem Bund 221, der als Anschlag 226 dient, einen ersten Abschnitt 222 auf, der eine Kopplung an eine Werkzeugschnittstelle zur Aufnahme von Werkzeug- oder Werkstückaufnahmen gemäß einer ersten Norm, hier der SK50-Norm, erlaubt, sowie einen sich an den ersten Abschnitt 222 mittelbar, also über einen Zwischenabschnitt 223 mit dem ersten Abschnitt 222 verbunden, anschließenden zweiten Abschnitt 224, der eine Kopplung an eine Werkzeugschnittstelle zur Aufnahme von Werkzeug- oder Werkstückaufnahmen gemäß der ersten Norm erlaubt, auf. Der erste Abschnitt 222 entspricht also einem Abschnitt eines SK50-Kegels, während der zweite Abschnitt 224 einem Abschnitt eines HSK80-Kegels entspricht.

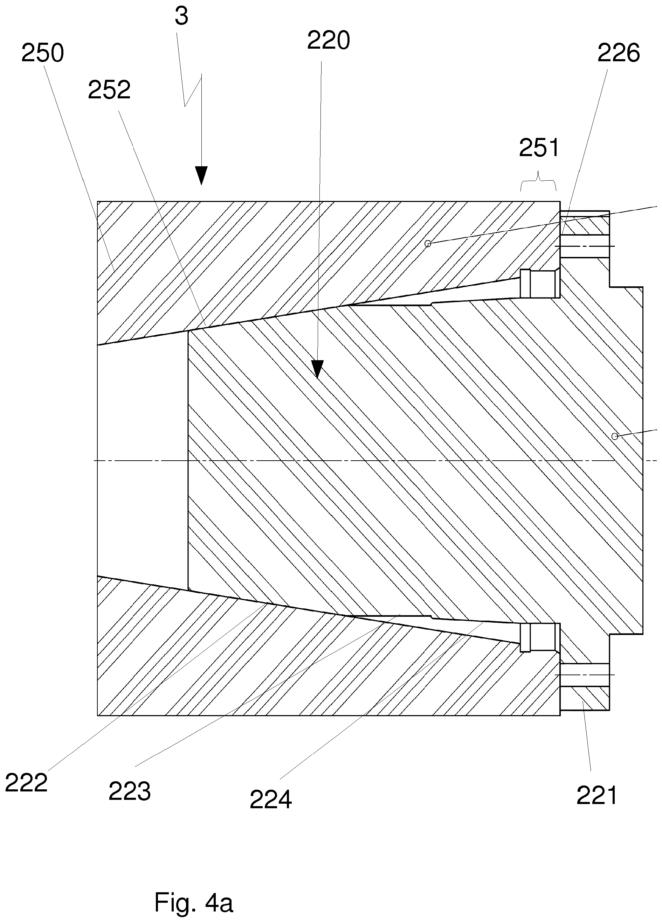

Die Figur 4a zeigt einen Ausschnitt aus einem Set 3 aus einer Werkzeugmaschine und einer Werkzeug- oder Werkstückaufnahme 200 gemäß Figur 3, der die Wechselwirkung der Werkzeug- oder Werkstückaufnahme 200 mit einer Werkzeugschnittstelle für Werkzeugaufnahmen nach SK-50 Norm illustriert, und zwar in einem Zustand des Sets, bei dem die Werkzeug- oder Werkstückaufnahme an der Werkzeugmaschine angeordnet ist. Dieser Ausschnitt deckt den Wechselwirkungsbereich zwischen dem dem Werkzeug zugewandten endseitigen Abschnitt einer Werkzeugschnittstelle 250 einer Spindel einer Werkzeugmaschine, und dem Kopplungsabschnitt 220 der Werkzeug- oder Werkstückaufnahme 200 ab.

Dabei ist die dargestellte Werkzeugschnittstelle 250 für die Aufnahme von Werkzeugaufnahmen gemäß der SK-50 Norm ausgelegt, weist aber in ihrem dem Werkzeug zugewandten Endbereich einen modifizierten Abschnitt 251, der mit einer ringförmigen Senke mit 70mm Durchmesser ausgeführt ist, auf.

Wie man der Figur 4a deutlich entnimmt, wirkt nur ein Abschnitt der Werkzeugschnittstelle 250, der Abschnitt 252, mit dem Kopplungsabschnitt 220 der Werkzeug- oder Werkstückaufnahme, genauer gesagt mit dem ersten Abschnitt 221 zusammen. Dies ist ausreichend, um die Kopplung zwischen Werkzeug- oder Werkstückaufnahme 200 und Werkzeugschnittstelle 250 sicher zu realisieren.

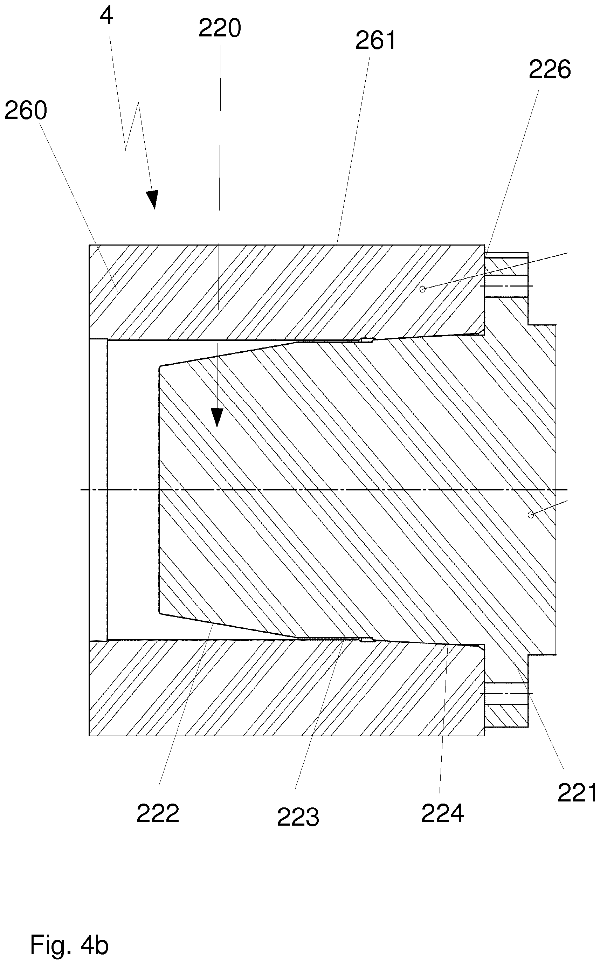

Die Figur 4b zeigt einen Ausschnitt aus einem Set 4 aus einer Werkzeugmaschine und einer Werkzeug- oder Werkstückaufnahme 200 gemäß Figur 3, der die Wechselwirkung der Werkzeug- oder Werkstückaufnahme 200 mit einer Werkzeugschnittstelle für Werkzeugaufnahmen nach SK-50 Norm illustriert, und zwar in einem Zustand des Sets, bei dem die Werkzeug- oder Werkstückaufnahme an der Werkzeugmaschine angeordnet ist. Dieser Ausschnitt deckt den Wechselwirkungsbereich zwischen dem dem Werkzeug zugewandten endseitigen Abschnitt einer Werkzeugschnittstelle 260 einer Spindel einer anderen Werkzeugmaschine als der des Sets aus Figur 4a oder einer anderen Spindel derselben Werkzeugmaschine wie der des Sets aus Figur 4a, und dem Kopplungsabschnitt 220 der Werkzeug- oder Werkstückaufnahme 200 ab. Dabei ist die dargestellte Werkzeugschnittstelle 260 für die Aufnahme von Werkzeugaufnahmen gemäß der HSK-80 Norm ausgelegt

Auch in der Figur 4b wirkt nur ein Abschnitt der Werkzeug- oder Werkstückaufnahme 200, nämlich der Abschnitt 261, mit dem Kopplungsabschnitt 220 der Werkzeug- oder Werkstückaufnahme, genauer gesagt mit dem zweiten Abschnitt 224 zusammen. Dies ist ausreichend, um die Kopplung zwischen Werkzeug- oder Werkstückaufnahme 200 und Werkzeugschnittstelle 260 sicher zu realisieren.

### Bezugszeichenliste

- 1,2,3,4: Set
- 100,200: Werkzeug- oder Werkstückaufnahme
- 110,210: Werkzeug- oder Werkstückaufnahmeabschnitt
- 111,211: Spannmittel
- 120,220: Kopplungsabschnitt
- 121,221: Bund
- 122: Adapterring
- 122a,122b: Außenkontur
- 124: Ringnut
- 125: Schraube
- 126,226: Anschlag
- 150,160,250,260: Werkzeugschnittstelle
- 151,251: modifizierter Abschnitt
- 161,252,261: Abschnitt
- 212: Spannzange
- 213: Führung
- 213a: Abschnitt
- 214: Tellerfederstapel
- 215: Stempel
- 222: erster Abschnitt
- 223: Zwischenabschnitt
- 224: zweiter Abschnitt
- 252: Abschnitt
- E: Ebene

## Patentansprüche

1. Werkzeug- oder Werkstückaufnahme (100,200) zur Kopplung eines Werkzeugs oder Werkstücks an eine Antriebsspindel einer Werkzeugmaschine, wobei die Werkzeug- oder Werkzeugaufnahme (100,200) einen Werkzeug- oder Werkstückaufnahmeabschnitt (110,210), an dem ein Spannmittel (111,211) zur Aufnahme des Werkzeugs oder Werkstücks angeordnet ist, und einen Kopplungsabschnitt (120,220) zur Kopplung an eine Werkzeugschnittstelle (150,160,250,260) der Antriebsspindel der Werkzeugmaschine aufweist, wobei der Kopplungsabschnitt (120,220) derart ausgestaltet ist, dass er zur Kopplung sowohl an eine Werkzeugschnittstelle (150,250) zur Aufnahme von Werkzeug- oder Werkstückaufnahmen gemäß einer ersten Norm als auch an eine Werkzeugschnittstelle (160,260) zur Aufnahme von Werkzeug- oder Werkstückaufnahmen gemäß einer zweiten Norm geeignet ist, **dadurch gekennzeichnet, dass** der Kopplungsabschnitt (120) einen Adapterring (222) aufweist, der in zwei unterschiedlichen Orientierungen an der Werkzeug- oder Werkstückaufnahme (100) fixierbar ist, so dass die Werkzeug- oder Werkstückaufnahme (100) in der einen Orientierung des Adapterrings (122) an die Werkzeugschnittstelle (150) zur Aufnahme von Werkzeug- oder Werkstückaufnahmen gemäß der ersten Norm koppelbar ist und in der zweiten Orientierung des Adapterrings (122) an die Werkzeugschnittstelle (160) zur Aufnahme von Werkzeug- oder Werkstückaufnahmen gemäß der zweiten Norm koppelbar ist.

2. Werkzeug- oder Werkstückaufnahme (100) nach Anspruch 1, **dadurch gekennzeichnet, dass** der Adapterring (122) abschnittsweise in eine in die Werkzeug- oder Werkstückaufnahme (100) eingebrachte Ringnut (124) aufgenommen ist.

3. Werkzeug- oder Werkstückaufnahme (100,200) zur Kopplung eines Werkzeugs oder Werkstücks an eine Antriebsspindel einer Werkzeugmaschine, wobei die Werkzeug- oder Werkzeugaufnahme (100,200) einen Werkzeug- oder Werkstückaufnahmeabschnitt (110,210), an dem ein Spannmittel (111,211) zur Aufnahme des Werkzeugs oder Werkstücks angeordnet ist, und einen Kopplungsabschnitt (120,220) zur Kopplung an eine Werkzeugschnittstelle (150,160,250,260) der Antriebsspindel der Werkzeugmaschine aufweist, wobei der Kopplungsabschnitt (120,220) derart ausgestaltet ist, dass er zur Kopplung sowohl an eine Werkzeugschnittstelle (150,250) zur Aufnahme von Werkzeug- oder Werkstückaufnahmen gemäß einer ersten Norm als auch an eine Werkzeugschnittstelle (160,260) zur Aufnahme von Werkzeug- oder Werkstückaufnahmen gemäß einer zweiten Norm geeignet ist, **dadurch gekennzeichnet, dass** der Kopplungsabschnitt (220) einen ersten Abschnitt (222) aufweist, der eine Kopplung an eine Werkzeugschnittstelle (250) zur Aufnahme von Werkzeug- oder Werkstückaufnahmen gemäß der ersten Norm erlaubt und einen sich an den ersten Abschnitt (222) mittelbar oder unmittelbar anschließenden zweiten Abschnitt (224) aufweist, der eine Kopplung an eine Werkzeugschnittstelle (260) zur Aufnahme von Werkzeug- oder Werkstückaufnahmen gemäß der zweiten Norm erlaubt.

4. Werkzeug- oder Werkstückaufnahme (100,200) nach einem vorstehenden Anspruch,
**dadurch gekennzeichnet, dass** die Werkzeugschnittstelle (150,250) zur Aufnahme von Werkzeug- oder Werkstückaufnahmen gemäß der ersten Norm eine für Steilkegel-Werkzeugaufnahmen geeignete Werkzeugschnittstelle (150,250) ist und dass die Werkzeugschnittstelle (160,260) zur Aufnahme von Werkzeug- oder Werkstückaufnahmen gemäß der zweiten Norm eine für Hohlschaftkegel-Werkzeugaufnahmen geeignete Werkzeugschnittstelle (160,260) ist.

5. Werkzeug- oder Werkstückaufnahme (100,200) nach einem vorstehenden Anspruch,
**dadurch gekennzeichnet, dass** die Werkzeug- oder Werkstückaufnahme (100,200) einen Anschlag (126,226) aufweist, der eine Einführtiefe der Werkzeug- oder Werkstückaufnahme (100,200) in die Werkzeugschnittstelle (150,160,250,260) definiert.

6. Set (1,2,3,4), umfassend eine Werkzeugmaschine mit mindestens einer Spindel, die eine Werkzeugschnittstelle (150, 160,250,260) zur Aufnahme von Werkzeug- oder Werkstückaufnahmen gemäß einer ersten Norm aufweist und mit mindestens einer Werkzeug- oder Werkstückaufnahme (100,200) nach einem der Ansprüche 1 bis 5.

7. Set (1,3) nach Anspruch 6,
**dadurch gekennzeichnet, dass** die Werkzeugschnittstelle (150,250) einen modifizierten Abschnitt (151,152) aufweist.

8. Set (1,2,3,4) nach Anspruch 6 oder 7,
**dadurch gekennzeichnet, dass** bei an der Werkzeugschnittstelle (150,160,250,260) bestimmungsgemäß angeordneter Werkzeug- oder Werkstückaufnahme (100,200) lediglich Abschnitte (151,161,252,261) der Werkzeugschnittstelle mit dem Kopplungsabschnitt (120,220) der Werkzeug- oder Werkstückaufnahme (100,200) zusammenwirken.

## Claims

1. Tool or workpiece holder (100, 200) for coupling a tool or a workpiece to a work spindle of a machine tool, wherein the tool or workpiece holder (100, 200) comprises a tool or workpiece holding section (110, 210), on which a clamping device (111, 211) for holding a tool or a workpiece is arranged, and a coupling section (120, 220) for coupling to a tool interface (150, 160, 250, 260) of the drive spindle of the machine tool, wherein the coupling section (120, 220) is implemented such that it is suitable for coupling both to a tool interface (150, 250), in order to hold a tool holder or to hold a workpiece holder in accordance with a first standard, as well as for coupling to a tool interface (160, 260) in order to hold a tool holder or to hold a workpiece holder in accordance with a second standard,
**characterized in that** the coupling section (120) comprises an adapter ring (222) which, in one orientation of the adapter ring (122), can be coupled to the tool interface (150) in order to hold a tool holder or to hold a workpiece holder in accordance with the first standard and, in the second orientation of the adapter ring (122), can be coupled to the tool interface (160) in order to hold a tool holder or to hold a workpiece holder in accordance with the second standard.

2. Tool or workpiece holder (100) in accordance with claim 1,
**characterized in that** the adapter ring (122) is partially held in a ring groove (124) formed in the tool holder or in the workpiece holder (100).

3. Tool or workpiece holder (100, 200) for coupling a tool or a workpiece to a drive spindle of a machine tool, wherein the tool or workpiece holder (100, 200) comprises a tool holding or a workpiece holding section (110, 210), on which a clamping device (111, 211) for holding a tool or a workpiece is arranged, and a coupling section (120, 220) for coupling to a tool interface (150, 160, 250, 260) of the drive spindle of the machine tool, wherein the coupling section (120, 220) is implemented such that it is suitable for coupling both to a tool interface (150, 250), in order to hold a tool holder or to hold a workpiece holder in accordance with a first standard, as well as for coupling to a tool interface (160, 260) in order to hold a tool holder or to hold a workpiece holder in accordance with a second standard,
**characterized in that** the coupling section (220) comprises a first section (222), which allows for a coupling to a tool interface (250) in order to hold a tool holder or to hold a workpiece holder in accordance with the first standard, and comprises a second section (224), which is directly or indirectly adjacent to the first section (222), and which allows for a coupling to a tool interface (260) in order to a tool holder or to hold a workpiece holder in accordance with the second standard.

4. Tool or workpiece holder (100, 200) in accordance with any of the preceding claims, **characterized in that** the tool interface (150), 250) for holding tool holders or workpiece holders in accordance with the first standard is a tool interface (150, 250) which is suitable for steep taper tool holders, and **in that** the tool interface (160, 260) for holding tool holders or workpiece holders in accordance with the second standard is a tool interface (160, 260) which is suitable for hollow shaft taper tool holders.

5. Tool or workpiece holder (100, 200) in accordance with any of the preceding claims, **characterized in that** the tool or workpiece holder (100, 200) comprises an end stop (126, 226) which defines an insertion depth of the tool holder or of the workpiece holder (100, 200) into the tool interface (150, 160, 250, 260).

6. Set (1, 2, 3, 4), comprising a machine tool having at least one spindle which comprises a tool interface (150, 160, 250, 260) for holding tool holders or workpiece holders in accordance with a first standard and having at least one tool holder or workpiece holder (100, 200) in accordance with any of claims 1 to 5.

7. Set (1, 3) in accordance with claim 6,
**characterized in that** the tool interface (150, 250) comprises a modified section (151, 152).

8. Set (1, 2, 3, 4) in accordance with claim 6 or 7,
**characterized in that**, when the tool holder or the workpiece holder (100. 200) is correctly arranged on the tool interface (150, 160, 250, 260), only sections (151, 161, 252, 261) of the tool interface interact with the coupling section (120, 220).

## Revendications

1. Porte-outil ou porte-pièce (100, 200) pour le couplage d'un outil ou d'une pièce à une broche entraînée d'une machine-outil,
- le porte-outil ou porte-pièce (100, 200) ayant un segment de réception d'outil ou de pièce (110, 210) avec un moyen de serrage (111, 211) pour recevoir l'outil ou la pièce et un segment de couplage (120, 220) pour le couplage à une interface d'outil (150, 160, 250, 260) de la broche entraînée de la machine-outil,
- le segment de couplage (120, 220) étant réalisé de façon à permettre le couplage à la fois à une interface d'outil (150, 250) pour recevoir un porte-outil ou un porte-pièce selon une première norme et aussi à une interface d'outil (160, 260) pour recevoir le porte-outil ou le porte-pièce selon une seconde norme,
**caractérisé en ce que**
le segment de couplage (120) a une bague adaptatrice (222) qui peut se fixer selon deux orientations différente au porte-outil ou porte-pièce (100) de façon que le porte-outil ou porte-pièce (100) dans une première orientation de la bague adaptatrice (122) se fixe à l'interface d'outil (150) pour recevoir le porte-outil ou porte-pièce selon une première norme et dans la seconde orientation de la bague adaptatrice (122) à l'interface d'outil (160) pour recevoir le porte-outil ou porte-pièce selon la seconde norme.

2. Porte-outil ou porte-pièce (100) selon la revendication 1,
**caractérisé en ce que**
la bague adaptatrice (122) est reçue par segment dans une rainure (124) réalisée dans le porte-outil ou porte-pièce (100).

3. Porte-outil ou porte-pièce (100, 200) pour le couplage d'un outil ou d'une pièce à une broche entraînée d'une machine-outil, le porte-outil ou porte-pièce (100, 200) ayant un segment de porte-outil ou porte-pièce (110, 210) avec un moyen de serrage (111, 211) pour recevoir l'outil ou la pièce, et
un segment de couplage (120, 220) pour le couplage à une interface d'outil (150, 160, 250, 260) de la broche entraînée de la machine-outil,
- le segment de couplage (120, 220) étant réalisé pour qu'il puisse être couplé à la fois à une interface d'outil (150, 250) pour recevoir un porte-outil ou porte-pièce selon une première norme et aussi à une interface d'outil (160, 260) pour recevoir un porte-outil ou porte-pièce selon une seconde norme,
**caractérisé en ce que**
le segment de couplage (220) a un premier segment (222) qui permet un couplage à une interface d'outil (250) pour recevoir un porte-outil ou porte-pièce selon la première norme et un second segment (224) directement ou indirectement adjacent au premier segment (222) et qui permet le couplage à une interface d'outil (260) pour recevoir un porte-outil ou porte-pièce selon la seconde norme.

4. Porte-outil ou porte-pièce (100, 200) selon l'une des revendications précédentes,
**caractérisé en ce que**
l'interface d'outil (150, 250) prévue pour recevoir des porte-outils ou des porte-pièces selon une première norme est une interface d'outil (150, 250) pour un porte-outil à cône raide et l'interface d'outil (160, 260) pour recevoir un porte-outil ou porte-pièce selon la seconde norme est une interface d'outil (160, 260) pour un porte-pièce à cône à tigre creuse.

5. Porte-outil ou porte-pièce (100, 200) selon l'une des revendications précédentes,
**caractérisé en ce que**
le porte-outil ou porte-pièce (100, 200) a une butée (126, 226) qui définit la profondeur d'engagement du porte-outil ou porte-pièce (100, 200) dans l'interface d'outil (150, 160, 250, 260).

6. Ensemble (1, 2, 3, 4) comprenant une machine-outil avec au moins une broche qui a une interface d'outil (150, 160, 250, 260) pour recevoir des porte-outil ou porte-pièce selon une première norme et au moins un porte-outil ou porte-pièce (100, 200) selon l'une des revendications 1 à 5.

7. Jeu (1, 3) selon la revendication 6,
**caractérisé en ce que**
l'interface d'outil (150, 250) a un segment modifié (151, 152).

8. Ensemble (1, 2, 3, 4) selon la revendication 6 ou 7,
**caractérisé en ce que**
pour l'interface d'outil (150, 160, 250, 260), pour des outils ou porte-outil (100, 200) installés de façon réglementaire, seuls les segments (151, 161, 252, 261) de l'interface d'outil coopère avec le segment de couplage (120, 220) du porte-outil ou porte-pièce (100, 200).
